# FASCICULE DE BREVET EUROPEEN

(11) **EP 3 963 278 B1**
(45) Date de publication et mention de la délivrance du brevet: **08.03.2023**
(21) Numéro de dépôt: 20720444.7
(22) Date de dépôt: 21.04.2020
(51) Int. Cl.: F28F 9/26, F28D 1/04, F28D 7/00, F28D 21/00

(54) **DISPOSITIF D'ÉCHANGE THERMIQUE MODULABLE**
MODIFIZIERBARE WÄRMEAUSTAUSCHVORRICHTUNG
MODIFIABLE HEAT EXCHANGE DEVICE

(30) Priorité: 29.04.2019 FR 1904512
(43) Date de publication de la demande: 09.03.2022
(73) Titulaire: VALEO SYSTEMES THERMIQUES, 78320 Le Mesnil Saint-Denis (FR)
(72) Inventeur: AZZOUZ, Kamel, 78322 LE MESNIL SAINT DENIS CEDEX (FR); DE VAULX, Cédric, 78322 LE MESNIL SAINT DENIS CEDEX (FR); TISSOT, Julien, 78320 LE MESNIL SAINT-DENIS (FR)
(74) Mandataire: Valeo Systèmes Thermiques
(86) Numéro de dépôt international: PCT/EP2020/061097
(87) Numéro de publication internationale: WO 2020/221626

(56) Documents cités:
- EP-A1- 3 385 654
- EP-A2- 1 557 622
- WO-A1-2004/027232
- WO-A1-2018/020139
- US-A- 1 899 629
- US-A1- 2002 023 743

## Description

La présente invention concerne le domaine technique des dispositifs d'échange thermique. Plus précisément, elle concerne un dispositif d'échange thermique modulable notamment pour batteries ou pack batteries pour véhicule automobile hybride ou électrique.

L'énergie électrique des véhicules hybrides ou électriques est généralement fournie par une ou plusieurs batteries. Dans ce type de véhicule, la batterie est généralement formée d'une pluralité de cellules de stockage d'énergie électrique disposées dans un boîtier de protection afin de former ce que l'on appelle un pack batterie.

Un problème posé dans l'utilisation de batteries est que, durant leur fonctionnement, elles sont amenées à produire de la chaleur ce qui risque de les endommager. De plus, leur rendement et leur autonomie varient en fonction de leur température. Ainsi, il est important, en fonctionnement, de les maintenir au plus proche de leur température optimale de fonctionnement, généralement entre 20 et 40 °C, et de les y amener rapidement en cas de température extérieure basse. Ainsi, la régulation thermique est un enjeu majeur pour de tels véhicules.

Afin de permettre la régulation thermique des batteries, ces dernières sont généralement accolées à un ou plusieurs échangeurs de chaleur reliés à un circuit de gestion thermique à l'intérieur desquels circule un fluide caloporteur. D'un véhicule à un autre, d'un constructeur à un autre et même parfois au sein d'un même modèle de véhicule, la disposition et la conformation des batteries peut varier ce qui rend difficile la mise au point d'échangeurs de chaleur pouvant être utilisés sur différents modèles. Il est ainsi généralement nécessaire de réaliser des échangeurs de chaleur distincts pour chaque type de batteries.

Une solution connue est d'utiliser des échangeurs de chaleur comme module de base d'un dispositif d'échange thermique modulable destiné à venir au contact des batteries. Les échangeurs de chaleur sont alors connectés les uns aux autres selon les besoins afin de former le dispositif d'échange thermique. Cependant, les échangeurs de chaleur dans ce genre de dispositif peuvent parfois être difficiles à connecter les uns aux autres et présenter des connecteurs complexes et limitant les possibilités de branchement. De plus, les connexions entre les échangeurs de chaleur peuvent parfois être difficiles à réaliser et même gêner le contact thermique avec la ou les batteries. US-A-2002023743 divulgue un dispositif selon le préambule de la revendication 1.

Un des buts de la présente invention est donc de remédier au moins partiellement aux inconvénients de l'art antérieur et de proposer un dispositif d'échange thermique modulaire amélioré.

La présente invention concerne donc un dispositif d'échange thermique comportant au moins un premier et un deuxième échangeurs de chaleur connectés l'un à l'autre, les au moins premier et deuxième échangeurs de chaleur comprenant tout deux une surface d'échange thermique à l'intérieure de laquelle un fluide caloporteur est destiné à circuler, chacun des premier et deuxième échangeurs de chaleur comportant deux collecteurs primaires de fluide respectivement disposés à deux des extrémités de la surface d'échange thermique, lesdits collecteurs primaires d'un même échangeur de chaleur étant parallèles l'un avec l'autre et s'étendant dans un plan parallèle à celui de la surface d'échange thermique ,
chaque collecteur primaire comportant, à au moins une de ses extrémités, un orifice de raccordement orienté selon le même axe que ledit collecteur primaire, les au moins premier et deuxième échangeurs de chaleur étant disposés sur un même plan de sorte qu'au moins un orifice de raccordement du premier échangeur de chaleur soient en vis-à-vis d'un orifice de raccordement du deuxième échangeur de chaleur,
le dispositif d'échange comportant en outre au moins un connecteur comportant une première portion de raccordement destinée à s'insérer dans un orifice de raccordement du premier échangeur de chaleur et une deuxième portion de raccordement destinée à s'insérer dans l'orifice de raccordement disposé en vis-à-vis du deuxième échangeur de chaleur.

Ce connecteur permet une connexion mécanique aisée des premier et deuxième échangeurs de chaleur entre eux. De plus du fait que les orifices de raccordement soient orientés selon le même axe que les collecteurs primaires, le dispositif d'échange thermique est plan, sans aspérités majeures qui pourraient réduire les possibilités de positionnement de l'échangeur de chaleur.

Selon l'invention, les collecteurs primaires comportent des orifices de raccordement secondaires orientés perpendiculairement à l'axe desdits collecteurs primaires.

Selon l'invention, le dispositif d'échange thermique comporte des collecteurs additionnels comportant :
- à au moins une de leurs extrémités, un orifice de raccordement s'étendant selon le même axe que lesdits collecteurs additionnels,
- des orifices de raccordement secondaires orientés perpendiculairement à l'axe desdits collecteurs additionnels

Selon un aspect de l'invention, le dispositif d'échange thermique comporte un connecteur de type connecteur traversant comportant une communication fluidique entre sa première et sa deuxième portion de raccordement.

Selon un autre aspect de l'invention, le dispositif d'échange thermique comporte un connecteur de type connecteur obturant comportant, entre sa première et sa deuxième portion de raccordement, une paroi obturatrice destinée à bloquer toute communication fluidique entre la première et la deuxième portion de raccordement.

Selon un autre aspect de l'invention, l'au moins un connecteur comporte une collerette externe disposée entre sa première et sa deuxième portion de raccordement, ladite collerette étant destinée à être positionnée entre les deux collecteurs raccordés l'un à l'autre.

Selon un autre aspect de l'invention, le dispositif d'échange thermique comporte au moins un joint d'étanchéité disposé entre les collecteurs raccordés l'un à l'autre, ledit joint d'étanchéité entourant le connecteur

Selon un autre aspect de l'invention, le dispositif d'échange thermique comporte un connecteur de type connecteur coudé comportant, entre la première et la deuxième portion de raccordement, un coude de sorte à connecter l'un à l'autre deux échangeurs de chaleur disposés selon des plans sécants

Selon un autre aspect de l'invention, le dispositif d'échange thermique comporte au moins un connecteur bouchant comportant une unique portion de raccordement destinée à s'insérer dans un orifice de raccordement et une paroi destinée à bloquer la circulation du fluide caloporteur.

Selon un autre aspect de l'invention, le connecteur bouchant comporte une butée sur tout son pourtour extérieur et en ce que le dispositif d'échange thermique comporte un joint d'étanchéité disposé entre ladite butée et le collecteur.

Selon un autre aspect de l'invention, l'orifice de raccordement comporte un retrait de matière annulaire en son sein et en ce que la portion de raccordement destinée à s'insérer dans ledit orifice de raccordement comporte :
- au moins une fente de déformation s'étendant parallèlement à l'axe de ladite portion de raccordement,
- un bourrelet destiné à s'insérer dans le retrait de matière dudit orifice de raccordement.

[Fig.1] la figure 1 montre une représentation schématique en perspective d'un dispositif d'échange thermique selon un mode de réalisation qui n'est pas conforme à l'invention,
[Fig.2] la figure 2 montre une représentation schématique en perspective éclatée du dispositif d'échange thermique de la figure 1,
[Fig.3] la figure 3 montre une représentation schématique en perspective d'un échangeur de chaleur selon un mode de réalisation particulier qui n'est pas conforme à l'invention,
[Fig.4] la figure 4 montre une représentation schématique en perspective d'un connecteur,
[Fig.5] la figure 5 montre une représentation schématique en coupe d'un connecteur traversant,
[Fig.6] la figure 6 montre une représentation schématique en coupe d'un connecteur obturant,
[Fig.7] la figure 7 montre une représentation schématique en perspective d'un connecteur bouchant,
[Fig.8] la figure 8 montre une représentation schématique en coupe du connecteur bouchant de la figure 7,
[Fig.9] la figure 9 montre une représentation schématique en perspective d'un échangeur de chaleur selon l'invention,
[Fig.10] la figure 10 montre une représentation schématique en perspective d'un collecteur additionnel,
[Fig.11] la figure 11 montre une représentation schématique en perspective d'un dispositif d'échange thermique selon un deuxième mode de réalisation de l'invention.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

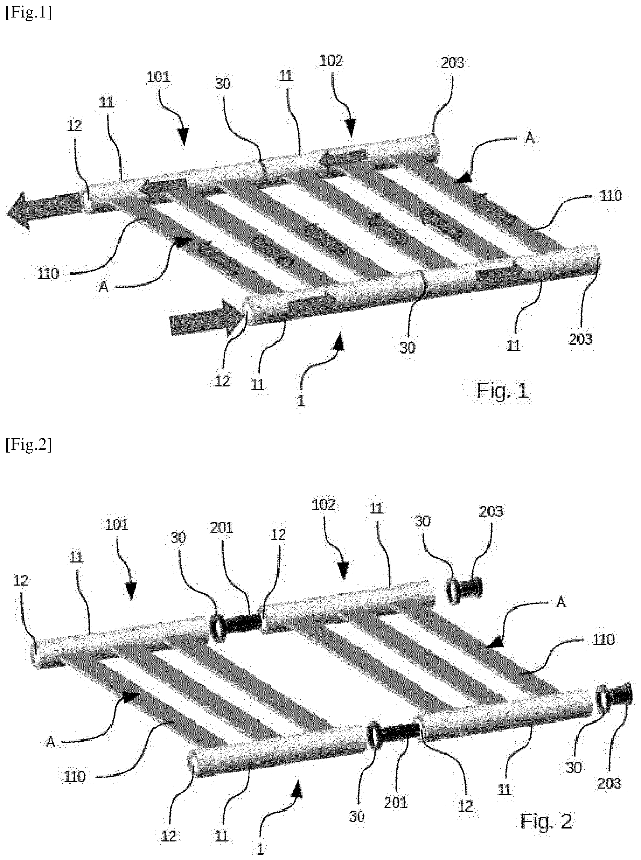

Les figures 1 et 2 montrent un dispositif d'échange thermique 1, notamment destiné à venir au contact de batteries d'un véhicule automobile électrique ou hybride.

Le dispositif d'échange thermique 1 comporte au moins un premier 101 et un deuxième 102 échangeurs de chaleur connectés l'un à l'autre. Ces premier 101 et deuxième 102 échangeurs de chaleur comprennent tous deux une surface d'échange thermique A à l'intérieure de laquelle un fluide caloporteur est destiné à circuler. C'est cette surface d'échange thermique A qui est destinée à venir au contact des batteries. La surface d'échange thermique A peut plus particulièrement être plane afin de faciliter le contact et les échanges thermiques avec les batteries.

Chacun des premier 101 et deuxième 102 échangeurs de chaleur comportent deux collecteurs primaires 11 de fluide disposé respectivement à deux des extrémités de la surface d'échange thermique A. Les collecteurs primaires 11 d'un même échangeur de chaleur 101, 102 sont parallèles l'un avec l'autre et s'étendent dans un plan parallèle à celui de la surface d'échange thermique A. Chaque collecteur primaire 11 comporte, à au moins une de ses extrémités, un orifice de raccordement 12 orienté selon le même axe que ledit collecteur primaire 11. Les au moins premier 101 et deuxième 102 échangeurs de chaleur sont disposés sur un même plan de sorte qu'au moins un orifice de raccordement 12 du premier échangeur de chaleur 101 soient en vis-à-vis d'un orifice de raccordement 12 du deuxième échangeur de chaleur 102.

L'orifice de raccordement 12 permet la connexion entre eux de deux collecteurs primaires 11 de deux échangeurs de chaleur 101, 102 distincts. L'orifice de raccordement 12 peut également permettre le raccordement du collecteur 11 à une arrivée de fluide caloporteur ou à une évacuation de fluide caloporteur.

Dans l'exemple illustré aux figures 1 et 2, la surface d'échange thermique A comporte des tubes plats 110 disposés côtes-à-côtes selon un même plan. Une première extrémité de ces tubes plats 110 sont ici reliées entre elles par un premier collecteur primaire 11 et une deuxième extrémité par un deuxième collecteur primaire 11. Ici, les collecteurs primaires 11 ont une forme cylindrique.

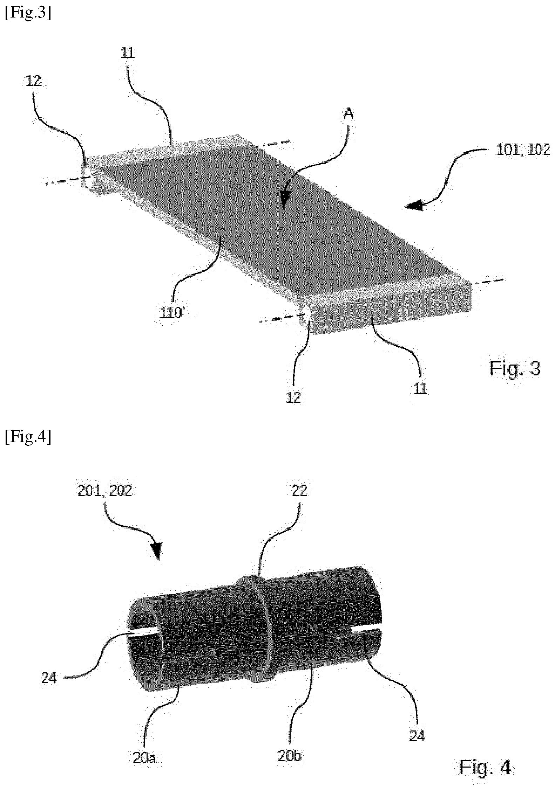

Il est cependant tout à fait possible d'imaginer des collecteurs primaires 11 ayant une forme différente, par exemple parallélépipédique comme sur la figure 3. De même, il est tout à fait possible d'imaginer une surface d'échange thermique A différente, comme par exemple, comportant une plaque 110' à l'intérieur de laquelle le fluide caloporteur est destiné à circuler entre les deux collecteurs primaires 11 comme illustré toujours à la figure 3.

Afin de connecter les premier 101 et deuxième 102 échangeurs de chaleur, le dispositif d'échange 1 comporte en outre au moins un connecteur 201, 202. Comme le montre plus en détail la figure 4, ce connecteur 201, 202 comporte :
- une première portion de raccordement 20a destinée à s'insérer dans un orifice de raccordement 12 du premier échangeur de chaleur 101, et
- une deuxième portion de raccordement 20b destinée à s'insérer dans l'orifice de raccordement 12 du deuxième échangeur de chaleur 102 disposé en vis-à-vis.

Ce connecteur 201, 202 permet une connexion mécanique aisée des premier 101 et deuxième 102 échangeurs de chaleur entre eux. De plus du fait que les orifices de raccordement 12 soient orientés selon le même axe que les collecteurs primaires 11, le dispositif d'échange thermique 1 est plan, sans aspérités majeures qui pourraient réduire les possibilités de positionnement de l'échangeur de chaleur 101, 102.

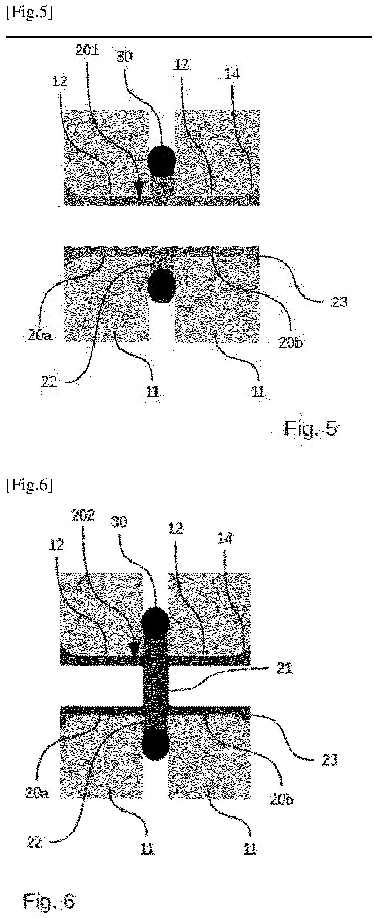

Comme le montre la figure 5, le connecteur 201 peut plus particulièrement être de type connecteur traversant. Ce connecteur traversant 201 comporte une communication fluidique entre sa première 20a et sa deuxième 20b portion de raccordement permettant au fluide caloporteur de circuler entre le premier 101 et le deuxième 102 échangeur de chaleur. Le connecteur traversant 201 permet ainsi une communication fluidique et une fixation mécanique entre le premier 101 et le deuxième 102 échangeur de chaleur ainsi qu'une liaison mécanique.

A contrario et comme le montre la figure 6, le connecteur 202 peut être de type connecteur obturant. Ce connecteur obturant 202 comporte, entre sa première 20a et sa deuxième 20b portion de raccordement, une paroi obturatrice 21 destinée à bloquer toute communication fluidique entre la première 20a et la deuxième 20b portion de raccordement et donc entre le premier 101 et le deuxième 102 échangeur de chaleur. Le connecteur obturant 202 ne permet quant à lui qu'une liaison mécanique entre le premier 101 et le deuxième 102 échangeur de chaleur.

Comme le montre les figures 4 à 6, l'au moins un connecteur 201, 202 peut comporter une collerette 22 externe disposée entre sa première 20a et sa deuxième 20b portion de raccordement. Cette collerette 22 est destinée à être positionnée entre les deux collecteurs 11, 11' raccordés l'un à l'autre. Cette collerette 22 permet de servir de butée pour l'enfoncement des première 20a et deuxième 20b portions de raccordement dans les orifices de raccordement 12.

Le dispositif d'échange thermique 1 peut notamment comporter au moins un joint d'étanchéité 30 disposé entre les collecteurs 11, 11' raccordés les uns aux autres. Ce joint d'étanchéité 30 entoure plus particulièrement l'au moins un connecteur 201, 202. Plus précisément, le joint d'étanchéité 30 est disposé autour de la collerette 22 et est comprimé par les deux collecteurs 11, 11' raccordés l'un à l'autre.

Comme illustré aux figures 5 et 6, l'orifice de raccordement 12 des collecteurs 11, 11' peut comporter un retrait de matière 14 annulaire en son sein. Complémentairement, la portion de raccordement 20a, 20b destinée à s'insérer dans ledit orifice de raccordement 12 comporte :
- au moins une fente de déformation 24 (visible sur la figure 4) s'étendant parallèlement à l'axe de ladite portion de raccordement 20a, 20b, et
- un bourrelet 23 destiné à s'insérer dans le retrait de matière 14 dudit orifice de raccordement 12.

Cela permet de bloquer le connecteur 201, 202 à l'intérieur de l'orifice de raccordement 12 et ainsi d'éviter une déconnexion intempestive mais également d'assurer une bonne liaison mécanique entre deux échangeurs de chaleur 101, 102. La fente de déformation 24 permet une déformation élastique de la portion de raccordement 20a, 20b lors de son insertion dans l'orifice de raccordement 12 et une bonne insertion du bourrelet 23 dans le retrait de matière 14. De préférence, la portion de raccordement 20a, 20b comporte deux fentes de déformation 24 disposées symétriquement.

Selon un mode de réalisation non représenté, le dispositif d'échange thermique 1 peut également comporter un connecteur de type connecteur coudé. Ce connecteur coudé comporte, entre la première 20a et la deuxième 20b portion de raccordement, un coude de sorte à connecter l'un à l'autre deux échangeurs de chaleur disposés selon des plans sécants. Il est ainsi possible par exemple d'avoir des échangeurs de chaleur sous les batteries mais également entre elles.

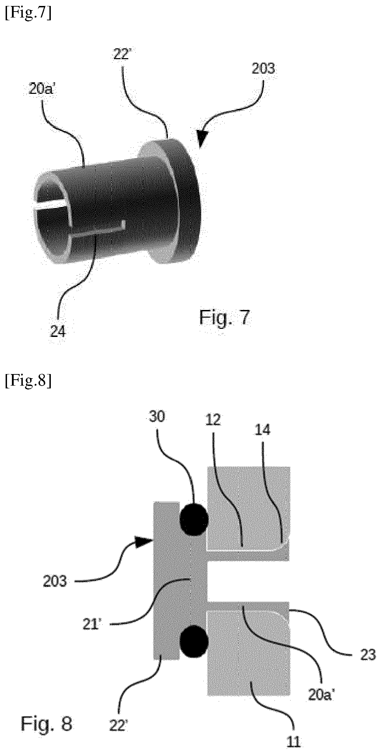

Le dispositif d'échange thermique 1 peut également comporter au moins un connecteur bouchant 203. Comme illustré plus en détail sur les figures 7 et 8, ce connecteur bouchant 203 comporte :
- une unique portion de raccordement 20a' destinée à s'insérer dans un orifice de raccordement 12, 12', 13, et
- une paroi 21' destinée à bloquer la circulation du fluide caloporteur.

Le connecteur bouchant 203 peut également comporter une butée 22' sur tout son pourtour extérieur. Le dispositif d'échange thermique 1 peut ainsi comporter un joint d'étanchéité 30 disposé entre ladite butée 22' et le collecteur 11,11'.

L'unique portion de raccordement 20a' du connecteur bouchant 203 peut également comporter :
- au moins une fente de déformation 24 s'étendant parallèlement à l'axe de ladite portion de raccordement 20a', et
- un bourrelet 23 destiné à s'insérer dans le retrait de matière 14 de l'orifice de raccordement 12. Cela permet de maintenir le connecteur bouchant 203 en place dans l'orifice de raccordement 12.

La présence d'un tel connecteur bouchant 203 permet à l'ensemble des échangeurs de chaleur 101, 102 formant le dispositif d'échange thermique 1 d'être identiques. Ces échangeurs de chaleur 101, 102 présentent tous des orifices de raccordement 12 aux deux extrémités de leurs collecteurs 11. Cela permet de faciliter le montage du dispositif d'échange thermique 1 et donc de réduire les coûts de production car un seul type d'échangeur de chaleur 101, 102 est nécessaire. De plus, en modulant la position et le type de connecteur 201, 202 et de connecteur bouchant 203 il est facile de moduler le circuit de fluide caloporteur selon les besoins.

Les figures 1 et 2 montrent un exemple d'assemblage d'un dispositif d'échange thermique 1 dont le circuit de fluide caloporteur, symbolisé par des flèches, est relativement simple. Un premier 101 et un deuxième 102 échangeur de chaleur sont accolés l'un à l'autre. Un premier collecteur 11 du premier échangeur de chaleur 101, par lequel arrive le fluide caloporteur, est relié à un premier collecteur 11 du deuxième échangeur de chaleur 102 par un connecteur traversant 201. Les autres orifices de raccordement 12 du deuxième échangeur de chaleur 102 sont quant à eux obstrués par des connecteurs bouchant 203.

Le fluide caloporteur arrive tout d'abord dans les premiers collecteurs 11 des premier 101 et deuxième 102 échangeurs de chaleur en passant par le premier collecteur 11 du premier échangeur de chaleur 101. Le fluide caloporteur est distribué dans les tubes plats 110 des premier 101 et deuxième 102 échangeurs de chaleur avant d'être collecté par les deuxièmes collecteurs 11 desdits premier 101 et deuxième 102 échangeurs de chaleur afin d'être évacué via le deuxième collecteur 11 du premier échangeur de chaleur 101.

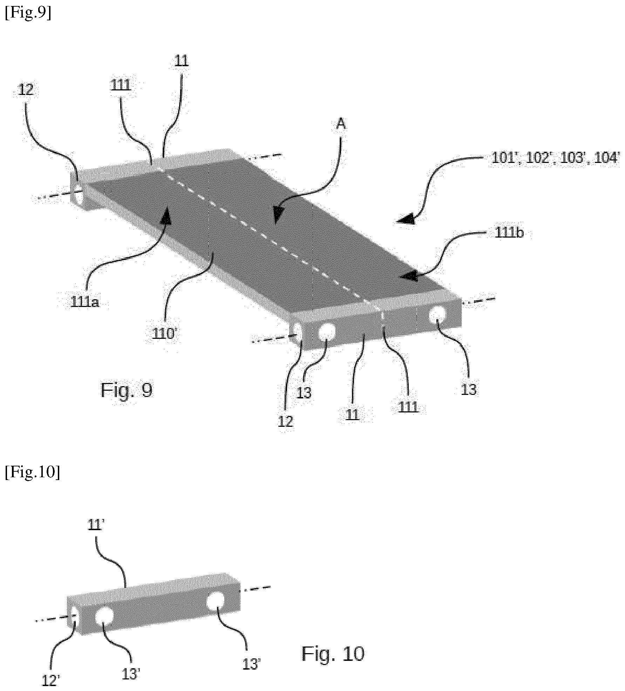

Selon un mode de réalisation particulier, illustré à la figure 9, les collecteurs primaires 11 des échangeurs de chaleur 101', 102', 103', 104' peuvent comporter des orifices de raccordement secondaires 13. Ces orifices de raccordement secondaires 13 sont notamment orientés perpendiculairement à l'axe desdits collecteurs primaires 11. Les orifices de raccordement secondaires 13 peuvent s'étendre dans le même plan que la surface d'échange thermique A, comme dans l'exemple illustré à la figure 9. Il est cependant tout à fait possible d'imaginer que ces orifices de raccordement secondaires 13 s'étendent selon un plan sécant de celui de la surface d'échange thermique A, par exemple un plan perpendiculaire à celui de la surface d'échange thermique A. Toujours selon la figure 9, l'échangeur de chaleur 101', 102', 103', 104' peut comporter deux chemins de circulation 111a et 111b séparés l'un de l'autre. Afin d'isoler ces deux chemins de circulation 111a et 111b, l'échangeur de chaleur 101, 102, 103, 104 comporte notamment une paroi séparatrice 111 disposée dans au moins un de ses collecteurs primaires 11. Dans le cadre d'un échangeur de chaleur 101', 102', 103', 104' à plaque 110', comme illustré sur la figure 9, les deux chemins de circulation 111a, 111b sont également définis dans la plaque 110' afin de former deux parcours distincts du fluide caloporteur.

Dans l'exemple illustré à la figure 9, l'échangeur de chaleur 101', 102', 103', 104', comporte des parois séparatrices 111 dans ses deux collecteurs primaires 11 de sorte à diviser lesdits collecteurs primaires 11 en deux. Chaque demi-collecteur primaire 11 est relié à un chemin de circulation 111a ou 111b distinct de la plaque 110'. Les collecteurs primaires 11 comportent des orifices de raccordement 12 à chacune de leurs extrémités et deux orifices de raccordement secondaires 13. Ces orifices de raccordement secondaires 13 sont disposés de sorte que chaque demi-collecteur primaire 11 comporte un orifice de raccordement 12 et un orifice de raccordement secondaire 13.

Le dispositif d'échange thermique 1 comporte des collecteurs additionnels 11', illustrés à la figure 10. Ce collecteur additionnel 11' comporte :
- à au moins une de ses extrémités, un orifice de raccordement 12' s'étendant selon le même axe que lesdits collecteurs additionnels 11',
- des orifices de raccordement secondaires 13' orientés perpendiculairement à l'axe desdits collecteurs additionnels 11'.

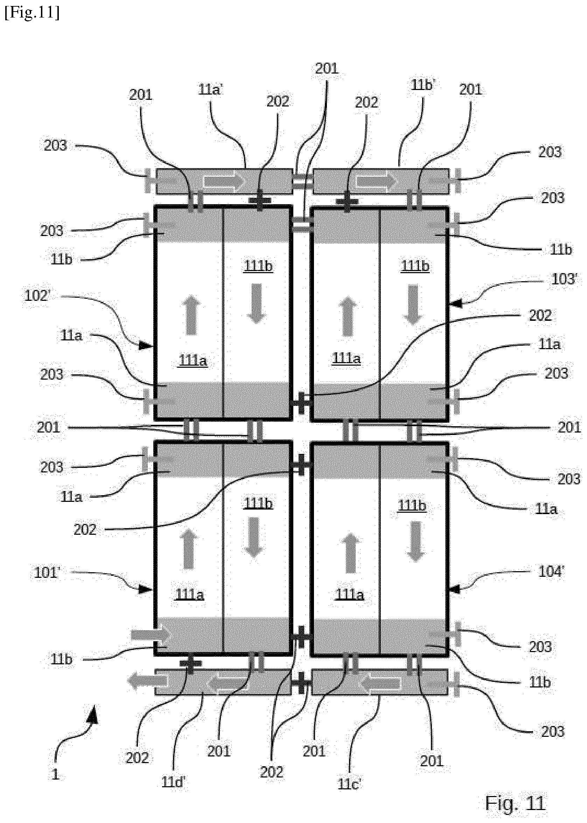

Comme le montre la figure 11, ce dispositif d'échange thermique 1 est notamment destiné à venir être placé parallèlement à un collecteur primaire 11 d'un échangeur de chaleur 101', 102', 103', 104'. Le collecteur additionnel 11' est notamment connecté au collecteur primaire 11 au moyen d'au moins un connecteur 201, 202 inséré dans leurs orifices de raccordement secondaires 13, 13' respectifs. Deux collecteurs additionnels 11' peuvent également être reliés entre eux au moyen d'au moins un connecteur 201, 202 inséré dans leurs orifices de raccordement 12, 12' respectifs. Les liaisons entre un collecteur additionnel 11' et un collecteur primaire 11 ou entre deux collecteurs additionnels 11' peut être traversante via un connecteur traversant 201 ou bien bloquant via un connecteur obturant 202, selon les besoins.

La figure 11 montre un autre exemple d'assemblage afin de former un dispositif d'échange thermique 1 comportant quatre échangeurs de chaleur 101', 102', 103', 104' à plaque comportant chacun deux chemins de circulation 11 1a, 111b ainsi qu'un premier 11a et un deuxième 11b collecteur primaire. Ces échangeurs de chaleur 101', 102', 103', 104' sont disposés sur un même plan. Le dispositif d'échange thermique 1 comporte également quatre collecteurs additionnels 11a', 11b', 11c' et 11d'.

Le premier collecteur primaire 11a d'un premier échangeur de chaleur 101' est connecté au premier collecteur primaire 11a d'un deuxième échangeur de chaleur 102' via leurs orifices de raccordement secondaires 13 (non visible sur la figure 11) au moyen de connecteurs traversant 201. Le premier chemin de circulation 111a du premier échangeur de chaleur 101' est ainsi connecté fluidiquement avec le premier chemin de circulation 111a du deuxième échangeur de circulation 102'. De même, le deuxième chemin de circulation 111b du premier échangeur de chaleur 101' est connecté fluidiquement avec le deuxième chemin de circulation 111b du deuxième échangeur de circulation 102'.

Le premier collecteur primaire 11a d'un troisième échangeur de chaleur 103' est connecté au premier collecteur primaire 11a d'un quatrième échangeur de chaleur 104' via leurs orifices de raccordement secondaires 13 (non visibles sur la figure 11) au moyen de connecteurs traversant 201. Le premier chemin de circulation 111a du troisième échangeur de chaleur 103' est ainsi connecté fluidiquement avec le premier chemin de circulation 111a du quatrième échangeur de circulation 104'. De même, le deuxième chemin de circulation 111b du troisième échangeur de chaleur 103' est connecté fluidiquement avec le deuxième chemin de circulation 111b du quatrième échangeur de circulation 104'.

Le deuxième collecteur primaire 11b du deuxième échangeur de chaleur 102' est connecté au deuxième collecteur primaire 11b du troisième échangeur de chaleur 103' au moyen d'un connecteur traversant 201 via leurs orifices de raccordement 12 (non visibles sur la figure 11) de sorte que le fluide caloporteur puisse circuler entre le deuxième chemin de circulation du deuxième échangeur de chaleur 102' et le premier chemin de circulation 111a du troisième échangeur de chaleur. Le premier collecteur primaire 11a du deuxième échangeur de chaleur 102' est quant à lui relié au moyen d'un connecteur bouchant 203 au premier collecteur primaire 11a du troisième échangeur de chaleur 103' via leurs orifices de raccordement 12 (non visibles sur la figure 11). Le premier collecteur primaire 11a du premier échangeur de chaleur 101' est quant à lui relié au moyen d'un connecteur bouchant 203 au premier collecteur primaire 11a du quatrième échangeur de chaleur 104' via leurs orifices de raccordement 12 (non visibles sur la figure 11). Le deuxième collecteur primaire 11b du premier échangeur de chaleur 101' est quant à lui relié au moyen d'un connecteur bouchant 203 au deuxième collecteur primaire 11a du quatrième échangeur de chaleur 104' via leurs orifices de raccordement 12 (non visibles sur la figure 11).

Un premier collecteur additionnel 11a' est connecté au deuxième collecteur primaire 11b du deuxième échangeur de chaleur 102' via leurs orifices de raccordement secondaires 13, 13' (non visibles sur la figure 11). Le premier chemin de circulation 111a du deuxième échangeur de chaleur 102' est connecté au premier collecteur additionnel 11a' au moyen d'un connecteur traversant 201. Le deuxième chemin de circulation 111b du deuxième échangeur de chaleur 102' est connecté au premier collecteur additionnel 11a' au moyen d'un connecteur obturant 202.

Un deuxième collecteur additionnel 11b' est connecté au deuxième collecteur primaire 11b du troisième échangeur de chaleur 103' via leurs orifices de raccordement secondaires 13, 13' (non visibles sur la figure 11). Le premier chemin de circulation 111a du troisième échangeur de chaleur 103' est connecté au deuxième collecteur additionnel 11a' au moyen d'un connecteur obturant 202.

Le deuxième chemin de circulation 111b du troisième échangeur de chaleur 103' est connecté au deuxième collecteur additionnel 11b' au moyen d'un connecteur traversant 201.

Le premier 11a' et le deuxième 11b' collecteur additionnel sont connectés l'un avec l'autre au moyen d'un connecteur traversant 201 via des orifices de raccordement 12 (non visibles sur la figure 11).

Un troisième collecteur additionnel 11c' est connecté au deuxième collecteur primaire 11b du quatrième échangeur de chaleur 104' via leurs orifices de raccordement secondaires 13, 13' (non visibles sur la figure 11). Le premier 111a et le deuxième 11b chemin de circulation du quatrième échangeur de chaleur 102' sont connectés au troisième collecteur additionnel 11c' au moyen d'un connecteur traversant 201.

Un quatrième collecteur additionnel 11d' est connecté au deuxième collecteur primaire 11b du premier échangeur de chaleur 101' via leurs orifices de raccordement secondaires 13, 13' (non visibles sur la figure 11). Le premier chemin de circulation 111a du premier échangeur de chaleur 101' est connecté au quatrième collecteur additionnel 11d'au moyen d'un connecteur obturant 202. Le deuxième chemin de circulation 111b du premier échangeur de chaleur 101' est connecté au quatrième collecteur additionnel 11d' au moyen d'un connecteur traversant 201.

Le troisième 11b' et le quatrième 11d' collecteur additionnel sont connectés l'un avec l'autre au moyen d'un connecteur obturant 202 via des orifices de raccordement 12 (non visibles sur la figure 11).

L'orifice de raccordement 12 libre du premier collecteur primaire 11a du premier échangeur de chaleur 101' ainsi que l'orifice de raccordement 12' libre du quatrième collecteur additionnel 11d' permettent la connexion du dispositif d'échange thermique 1 à un circuit de gestion thermique dans lequel circule le fluide caloporteur. Des connecteurs bouchant 203 sont également utilisés pour boucher les autres orifices de raccordement 12 et 12' non utilisés.

Comme illustré par des flèches sur la figure 11, le fluide caloporteur arrive tout d'abord dans le premier collecteur primaire 11a du premier échangeur de chaleur 101' et traverse son premier chemin de circulation 111a. Le fluide caloporteur passe ensuite dans :
- le premier chemin de circulation 111a du deuxième échangeur de chaleur 102',
- le premier collecteur additionnel 11a',
- le deuxième collecteur additionnel 11b',
- le deuxième chemin de circulation 111b du troisième échangeur de chaleur 103',
- le deuxième chemin de circulation 111b du quatrième échangeur de chaleur 104',
- le troisième collecteur additionnel 11c',
- le premier chemin de circulation 111a du quatrième échangeur de chaleur 104',
- le premier chemin de circulation 111a du troisième échangeur de chaleur 103',
- le deuxième chemin de circulation 111b du deuxième échangeur de chaleur 102',
- le deuxième chemin de circulation 111b du premier échangeur de chaleur 101', et
- le quatrième collecteur additionnel 11d'.

Cet assemblage du dispositif d'échange thermique 1 illustré à la figure 11 permet un refroidissement homogène des batteries du fait du circuit de circulation du fluide caloporteur. De plus il permet que l'arrivée et l'évacuation de fluide caloporteur soient l'une à côté de l'autre ce qui facilite les branchements et la mise en place.

Ainsi, on voit bien que le dispositif d'échange thermique 1 permet de par la structure des échangeurs de chaleur 101, 102 et l'utilisation de connecteurs 201, 202 une connexion mécanique ainsi que fluidique aisée entre lesdits échangeurs de chaleur 101, 102. De plus le dispositif d'échange thermique 1 grâce à ces connecteurs 201, 202 et 203 permet une grande modularité afin de s'adapter aux différentes contraintes liées au véhicule automobile.

## Revendications

1. Dispositif d'échange thermique (1) comportant au moins un premier (101) et un deuxième (102) échangeurs de chaleur connectés l'un à l'autre, les au moins premier (101) et deuxième (102) échangeurs de chaleur comprenant tous deux une surface d'échange thermique (A) à l'intérieure de laquelle un fluide caloporteur est destiné à circuler, chacun des premier (101) et deuxième (102) échangeurs de chaleur comportant deux collecteurs primaires (11) de fluide respectivement disposés à deux des extrémités de la surface d'échange thermique (A), lesdits collecteurs primaires (11) d'un même échangeur de chaleur (101, 102) étant parallèles l'un avec l'autre et s'étendant dans un plan parallèle à celui de la surface d'échange thermique (A),
chaque collecteur primaire (11) comportant, à au moins une de ses extrémités, un orifice de raccordement (12) orienté selon le même axe que ledit collecteur primaire (11), les au moins premier (101) et deuxième (102) échangeurs de chaleur étant disposés sur un même plan de sorte qu'au moins un orifice de raccordement (12) du premier échangeur de chaleur (101) soient en vis-à-vis d'un orifice de raccordement (12) du deuxième échangeur de chaleur (102),
le dispositif d'échange (1) comportant en outre au moins un connecteur (201 202) comportant une première portion de raccordement (20a) destinée à s'insérer dans un orifice de raccordement (12) du premier échangeur de chaleur (101) et une deuxième portion de raccordement (20b) destinée à s'insérer dans l'orifice de raccordement (12) disposé en vis-à-vis du deuxième échangeur de chaleur (102),
**caractérisé en ce que** les collecteurs primaires (11) comportent des orifices de raccordement secondaires (13) orientés perpendiculairement à l'axe desdits collecteurs primaires (11) **en ce que** le dispositif comporte des collecteurs additionnels (11') comportant :
- à au moins une de leurs extrémités, un orifice de raccordement (12') s'étendant selon le même axe que lesdits collecteurs additionnels (11'),
- des orifices de raccordement secondaires (13') orientés perpendiculairement à l'axe desdits collecteurs additionnels (11').

2. Dispositif d'échange thermique (1) selon l'une quelconque des revendications précédentes, **caractérisé en ce qu'**il comporte un connecteur (201) de type connecteur traversant comportant une communication fluidique entre sa première (20a) et sa deuxième (20b) portion de raccordement.

3. Dispositif d'échange thermique (1) selon l'une quelconque des revendications précédentes, **caractérisé en ce qu'**il comporte un connecteur (202) de type connecteur obturant comportant, entre sa première (20a) et sa deuxième (20b) portion de raccordement, une paroi obturatrice (21) destinée à bloquer toute communication fluidique entre la première (20a) et la deuxième (20b) portion de raccordement.

4. Dispositif d'échange thermique (1) selon l'une quelconque des revendications précédentes, **caractérisé en ce que** l'au moins un connecteur (201, 202) comporte une collerette (22) externe disposée entre sa première (20a) et sa deuxième (20b) portion de raccordement, ladite collerette (22) étant destinée à être positionnée entre les deux collecteurs (11, 11') raccordés l'un à l'autre.

5. Dispositif d'échange thermique (1) selon l'une quelconque des revendications précédentes, **caractérisé en ce qu'**il comporte un connecteur de type connecteur coudé comportant, entre la première (20a) et la deuxième (20b) portion de raccordement, un coude de sorte à connecter l'un à l'autre deux échangeurs de chaleur disposés selon des plans sécants.

6. Dispositif d'échange thermique (1) selon l'une quelconque des revendications précédentes, **caractérisé en ce qu'**il comporte au moins un connecteur bouchant (203) comportant une unique portion de raccordement (20a') destinée à s'insérer dans un orifice de raccordement (12, 12', 13) et une paroi (21') destinée à bloquer la circulation du fluide caloporteur.

7. Dispositif d'échange thermique (1) selon la revendication précédente, **caractérisé en ce que** le connecteur bouchant (203) comporte une butée (22') sur tout son pourtour extérieur et **en ce que** le dispositif d'échange thermique (1) comporte un joint d'étanchéité (30) disposé entre ladite butée (22') et le collecteur (11,11').

8. Dispositif d'échange thermique (1) selon l'une quelconque des revendications précédentes, **caractérisé en ce que** l'orifice de raccordement (12, 12', 13) comporte un retrait de matière (14) annulaire en son sein et **en ce que** la portion de raccordement (20a, 20a', 20b) destinée à s'insérer dans ledit orifice de raccordement (12, 12', 13) comporte :
- au moins une fente de déformation (24) s'étendant parallèlement à l'axe de ladite portion de raccordement (20a, 20a', 20b),
- un bourrelet (23) destiné à s'insérer dans le retrait de matière (14) dudit orifice de raccordement (12, 12', 13).

## Patentansprüche

1. Wärmetauschvorrichtung (1) mit mindestens einem ersten (101) und einem zweiten Wärmetauscher (102), die miteinander verbunden sind, wobei sowohl der mindestens eine erste (101) als auch der mindestens eine zweite Wärmetauscher (102) eine Wärmetauschfläche (A) umfassen, in deren Innerem ein Wärmeträgerfluid zirkulieren soll, wobei sowohl der erste (101) als auch der zweite Wärmetauscher (102) zwei primäre Fluidkollektoren (11) umfassen, die jeweils an zwei der Enden der Wärmetauschfläche (A) angeordnet sind, wobei die primären Kollektoren (11) eines gleichen Wärmetauschers (101, 102) parallel zueinander sind und sich in einer zur Ebene der Wärmetauschfläche (A) parallelen Ebene erstrecken,
wobei jeder primäre Kollektor (11) an mindestens einem seiner Enden eine Verbindungsöffnung (12) aufweist, die entlang der gleichen Achse wie der primäre Kollektor (11) ausgerichtet ist, wobei der mindestens eine erste (101) und der mindestens eine zweite Wärmetauscher (102) in einer gleichen Ebene angeordnet sind, sodass mindestens eine Verbindungsöffnung (12) des ersten Wärmetauschers (101) einer Verbindungsöffnung (12) des zweiten Wärmetauschers (102) gegenüberliegt,
wobei die Tauschvorrichtung (1) außerdem mindestens einen Verbinder (201, 202) aufweist, der einen ersten Verbindungsabschnitt (20a) zum Einsetzen in eine Verbindungsöffnung (12) des ersten Wärmetauschers (101) und einen zweiten Verbindungsabschnitt (20b) zum Einsetzen in die gegenüberliegende Verbindungsöffnung (12) des zweiten Wärmetauschers (102) aufweist,
**dadurch gekennzeichnet, dass** die primären Kollektoren (11) sekundäre Verbindungsöffnungen (13) aufweisen, die senkrecht zur Achse der primären Kollektoren (11) ausgerichtet sind, und dass die Vorrichtung zusätzliche Kollektoren (11') aufweist, die Folgendes aufweisen:
- an mindestens einem ihrer Enden eine Verbindungsöffnung (12'), die sich entlang der gleichen Achse wie die zusätzlichen Kollektoren (11') erstecken,
- sekundäre Verbindungsöffnungen (13'), die senkrecht zur Achse der zusätzlichen Kollektoren (11') ausgerichtet sind.

2. Wärmetauschvorrichtung (1) nach dem vorangehenden Anspruch, **dadurch gekennzeichnet, dass** sie einen Verbinder (201) vom Typ Durchgangsverbinder aufweist, der eine Fluidverbindung zwischen seinem ersten (20a) und seinem zweiten Verbindungsabschnitt (20b) aufweist.

3. Wärmetauschvorrichtung (1) nach einem der vorangehenden Ansprüche, **dadurch gekennzeichnet, dass** sie einen Verbinder (202) vom Typ verschließender Verbinder umfasst, der zwischen seinem ersten (20a) und seinem zweiten Verbindungsabschnitt (20b) eine verschließende Wand (21) aufweist, die dazu bestimmt ist, jede Fluidverbindung zwischen dem ersten (20a) und dem zweiten Verbindungsabschnitt (20b) zu blockieren.

4. Wärmetauschvorrichtung (1) nach einem der vorangehenden Ansprüche, **dadurch gekennzeichnet, dass** der mindestens eine Verbinder (201, 202) einen äußeren Flansch (22) aufweist, der zwischen seinem ersten (20a) und seinem zweiten Verbindungsabschnitt (20b) angeordnet ist, wobei der Flansch (22) dazu bestimmt ist zwischen den beiden miteinander verbundenen Kollektoren (11, 11') angeordnet zu sein.

5. Wärmetauschvorrichtung (1) nach einem der vorangehenden Ansprüche, **dadurch gekennzeichnet, dass** sie einen Verbinder vom Typ Winkelverbinder aufweist, der zwischen dem ersten (20a) und dem zweiten Verbindungsabschnitt (20b) einen Winkel aufweist, um zwei Wärmetauscher, die in sich schneidenden Ebenen angeordnet sind, miteinander zu verbinden.

6. Wärmetauschvorrichtung (1) nach einem der vorangehenden Ansprüche, **dadurch gekennzeichnet, dass** sie mindestens einen verstopfenden Verbinder (203) aufweist, der einen einzigen Verbindungsabschnitt (20a') zur Einführung in eine Verbindungsöffnung (12, 12', 13) und eine Wand (21') zum Blockieren der Zirkulation des Wärmeträgerfluids aufweist.

7. Wärmetauschvorrichtung (1) nach dem vorangehenden Anspruch, **dadurch gekennzeichnet, dass** der verstopfende Verbinder (203) über seinen gesamten Außenumfang einen Anschlag (22') aufweist und dass die Wärmetauschvorrichtung (1) eine zwischen dem Anschlag (22') und dem Kollektor (11, 11') angeordnete Dichtung (30) aufweist.

8. Wärmetauschvorrichtung (1) nach einem der vorangehenden Ansprüche, **dadurch gekennzeichnet, dass** die Verbindungsöffnung (12, 12', 13) eine ringförmige Materialaussparung (14) in ihrem Inneren aufweist und dass der Verbindungsabschnitt (20a, 20a', 20b) zur Einführung in die Verbindungsöffnung (12, 12', 13) Folgendes aufweist:
- mindestens einen Verformungsschlitz (24), der sich parallel zur Achse des Verbindungsabschnitts (20a, 20a', 20b) erstreckt,
- eine Wulst (23) zur Einführung in die Materialaussparung (14) der Verbindungsöffnung (12, 12', 13) .

## Claims

1. Heat exchange device (1) comprising at least a first heat exchanger (101) and a second heat exchanger (102) that are connected to one another, the at least first heat exchanger (101) and second heat exchanger (102) both comprising a heat exchange surface area (A) inside which a heat-transfer fluid is intended to circulate, each of the first heat exchanger (101) and second heat exchanger (102) comprising two primary fluid headers (11) that are respectively disposed at two of the ends of the heat exchange surface area (A), said primary headers (11) of the same heat exchanger (101, 102) being parallel to one another and extending in a plane parallel to that of the heat exchange surface area (A),
each primary header (11) comprising, at at least one of its ends, a connection orifice (12) oriented along the same axis as said primary header (11), the at least first heat exchanger (101) and second heat exchanger (102) being disposed in the same plane such that at least one connection orifice (12) of the first heat exchanger (101) faces a connection orifice (12) of the second heat exchanger (102),
the exchange device (1) further comprising at least one connector (201, 202) comprising a first connection portion (20a) intended to be inserted in a connection orifice (12) of the first heat exchanger (101) and a second connection portion (20b) intended to be inserted in the connection orifice (12) disposed facing the second heat exchanger (102),
**characterized in that** the primary headers (11) comprise secondary connection orifices (13) that are oriented perpendicularly with respect to the axis of said primary headers (11), **in that** the device comprises additional headers (11') comprising:
- at at least one of their ends, a connection orifice (12') extending along the same axis as said additional headers (11'),
- secondary connection orifices (13') oriented perpendicularly with respect to the axis of said additional headers (11').

2. Heat exchange device (1) according to the preceding claim, **characterized in that** it comprises a connector (201) of the through-connector type having fluidic communication between its first connection portion (20a) and its second connection portion (20b) .

3. Heat exchange device (1) according to either one of the preceding claims, **characterized in that** it comprises a connector (202) of the closing connector type comprising, between its first connection portion (20a) and its second connection portion (20b), a closure wall (21) intended to prevent any fluidic communication between the first connection portion (20a) and the second connection portion (20b) .

4. Heat exchange device (1) according to any one of the preceding claims, **characterized in that** the at least one connector (201, 202) comprises an external collar (22) disposed between its first connection portion (20a) and its second connection portion (20b), said collar (22) being intended to be positioned between the two headers (11, 11') that are connected to one another.

5. Heat exchange device (1) according to any one of the preceding claims, **characterized in that** it comprises a connector of the angled connector type comprising, between the first connection portion (20a) and the second connection portion (20b), a bend so as to connect together two heat exchangers that are disposed in secant planes.

6. Heat exchange device (1) according to any one of the preceding claims, **characterized in that** it comprises at least one plugging connector (203) comprising a single connection portion (20a') intended to be inserted in a connection orifice (12, 12', 13) and a wall (21') intended to prevent circulation of the heat-transfer fluid.

7. Heat exchange device (1) according to the preceding claim, **characterized in that** the plugging connector (203) comprises a stop (22') over its entire outer periphery, and **in that** the heat exchange device (1) comprises a seal (30) disposed between said stop (22') and the header (11, 11').

8. Heat exchange device (1) according to any one of the preceding claims, **characterized in that** the connection orifice (12, 12', 13) comprises an annular removal of material (14) within it, and **in that** the connection portion (20a, 20a', 20b) intended to be inserted in said connection orifice (12, 12', 13) comprises:
- at least one deformation slot (24) extending parallel to the axis of said connection portion (20a, 20a', 20b),
- a protrusion (23) intended to be inserted in said removal of material (14) in said connection orifice (12, 12', 13).
